# EUROPEAN PATENT APPLICATION

(11) **EP 2 207 120 A2**
(43) Date of publication of application: **14.07.2010**
(21) Application number: 09173634.8
(22) Date of filing: 21.10.2009
(51) Int. Cl.: G06F 21/00

(54) **System operating method using hardware lock and electronic device started by utilizing hardware lock**

(30) Priority: 31.12.2008 TW 97151786
(71) Applicant: Giga-Byte Technology Co., Ltd., Taipei 231 (TW)
(72) Inventor: Hsieh, Shang Ta, 231, Hsin Tien, Taipei County (TW)
(74) Representative: Schwerbrock, Florian

(57) **Abstract**

A system operating method using a hardware lock and an electronic device started by utilizing the hardware lock are described. The method includes the following steps. A connection state of a connection unit is detected. A hardware identification (ID) of a hardware device connected to the connection unit is read, and a key ID stored in the electronic device is compared with the hardware ID. When the hardware ID matches with the key ID, a booting procedure of the electronic device is executed. When the hardware device is not connected to all the connection units, the electronic device is turned off. When the hardware ID does not match with the key ID, the electric device is turned off. Here, the electronic device is started by plugging the hardware lock, and it is continuously detected whether the hardware lock is plugged or not, thereby protecting data.

## Description

### BACKGROUND OF THE INVENTION

### Field of Invention

The present invention relates to a system operating method, and more particularly to a system operating method using a hardware lock and an electronic device started by utilizing a hardware lock.

### Related Art

The concept of intellectual property rights is accepted by more and more people, so hardware and software researchers have made great efforts in terms of labor and resources to develop the means for protecting the right of use of software or hardware.

In the past, in order to protect the data in an electronic device, and prevent the data in the electronic device from being stolen, a boot password is set in an operating system (for example, the Windows operating system or the Linux operating system) that runs on an electronic device, so as to prevent other persons from stealing the data in the hard disk when using the operating system. Alternatively, a standby password is set in the operation system, such that when the owner of the electronic device temporally moves away from the electronic device, it is possible to prevent the person who intends to steal the data from stealing the data in the hard disk. Further, when the electronic device is started, a password may be set on an operated basic I/O system (BIOS) by the user. When the electronic device is started, the BIOS firstly inquires the user for the password before checking the hardware environment and relevant settings. If the user inputs an error password, other operations cannot be executed, so as to prevent the person who intends to steal the data when the operating system runs on the electronic device.

However, if time permits, the boot password, the standby password, and even the BIOS password set in the operating system may be cracked by the person who is familiar with the computer programming language or by utilizing a developed cracking program, such that the important data may be stolen by the person who intends to steal the data.

### SUMMARY OF THE INVENTION

The present invention is a system operating method using a hardware lock and an electronic device started by utilizing a hardware lock, which are capable of preventing a risk that the electronic device is cracked by hackers when an operating system runs on the electronic device.

The system operating method using the hardware lock of the present invention is applied to an electronic device having at least one connection unit.

Firstly, an electronic device is started to run a BIOS, and it is determined whether a hardware key protection function in the BIOS is activated or not.

When the hardware key protection function is activated, a connection state of the connection unit is detected. If a hardware device is not connected to all the connection units, the electronic device is turned off. If the hardware device is connected to the connection unit, it is identified whether the hardware device is the hardware lock or not.

When it is detected that the hardware device is not connected to all the connection units, firstly it is determined whether the hardware device is connected to the connection unit or not (that is, plugged on the connection unit) repeatedly in a time. If the hardware device is not connected to all the connection units when the confirmation time is reached, the electronic device is turned off. If it is detected that the hardware device is connected to the connection unit before the confirmation time is reached, it is identified whether the hardware device is the hardware lock or not.

When it is identified whether the hardware device is the hardware lock or not, firstly, a hardware identification (ID) of each hardware device connected to the connection unit is read, and a key ID stored in the electronic device is read. Then, each hardware ID is compared with each key ID, so as to determine whether each hardware ID matches with the key ID or not. When the hardware ID does not match with the key ID, a procedure of turning off the electronic device is executed. When the hardware ID matches with the key ID, a booting procedure of the electronic device is executed. It may be set in the BIOS that only one hardware device having the hardware ID needs to be connected to the connection unit; when the hardware ID matches with one of the key IDs, the booting procedure of the electronic device is executed. It may also be set in the BIOS that two or more hardware devices having the hardware ID must be connected to the connection unit, when each hardware ID matches with one of the key IDs, the booting procedure of the electronic device is executed. Definitely, it may also be set in the BIOS that the hardware device having the hardware ID is connected to more than one specific connection unit, when the hardware ID matches with the key ID, the booting procedure of the electronic device is executed.

Here, when the hardware ID does not match with the key ID, firstly it is repeatedly determined whether other hardware devices are connected to the connected unit in a time. If the hardware device is not connected to all the connection units when the confirmation time is reached, the electronic device is turned off. If it is detected the hardware device is connected to the connection unit before the confirmation time is reached, it is identified whether the hardware device is the hardware lock or not.

After the booting procedure is completed, the connection state of the connection unit is repeatedly detected, so as to confirm that the hardware device having the hardware ID matching with the key ID is not removed from the connection unit. Here, firstly the connection state of the connection unit is detected. When the at least one hardware device is not connected to the connection unit, the electronic device is turned off.

The booting procedure may be an operating system stored in the electronic device.

The electronic device started by utilizing the hardware lock of the present invention comprises a case, a main board, peripheral connection units, a first storing unit, hardware devices, a second storing unit, and a processing module.

The main board is installed in the case.

The peripheral connection units are electrically connected to the main board.

The first storing unit is disposed on the main board, and is used to store a key ID.

Each of the hardware devices respectively records a hardware ID. Each hardware ID is corresponding to one of the key IDs. Each of the hardware devices is used to plug on one of the at least one peripheral connection unit.

The second storing unit is electrically connected to the main board. The second storing unit is used to store the operating system.

The processing module is used to detect the connection state of the peripheral connection units, compare each hardware ID with the key ID, and execute relevant operations.

The electronic device started by utilizing the hardware lock further comprises a power supply module and a power actuation element. The power supply module is electrically connected to the electronic device, and is used to supply an electric energy to the electronic device. The power actuation element is electrically connected to the electronic device, and is used to start the electronic device after being triggered.

After the electronic device is started, the processing module detects the connection state of the peripheral connection unit, and compares each hardware ID with the key ID. When the hardware device is not connected to all the peripheral connection units, the electronic device is turned off. When the hardware ID respectively matches with one of the key IDs, a booting procedure of the electronic device is executed. When the at least one hardware ID does not match with the at least one key ID, the electronic device is turned off.

After the booting procedure is completed, the processing module detects the connection state of the peripheral connection unit, and compares each hardware ID with the key ID. When it is confirmed that each hardware device is not connected to each peripheral connection unit, the electronic device is turned off.

Here, when the system operating method using the hardware lock and the electronic device started by utilizing the hardware lock of the present invention are applied to the electronic device, a hardware key protection function is set in the BIOS before leaving the factory. Here, the hardware key protection function is preset to be activated; after the electronic device is started, the processing module detects the connection state of the connection unit on the electronic device, determines whether the hardware device is plugged or not, and reads the hardware ID of the hardware device, so as to identify whether the read hardware ID matches with the key ID stored in the storing unit in the electronic device. If yes, a controller executes the booting procedure to run the operating system; if no, the controller performs an operation of shutting down the electronic device.

Therefore, in the system operating method using the hardware lock and the electronic device started by utilizing the hardware lock of the present invention, it is determined whether to continuously execute the booting procedure to run the operating system or not by detecting whether the hardware device having the hardware ID is plugged or not, thereby effectively preventing the danger of malicious intrusion or cracking by hackers.

Further, in an embodiment, after the booting procedure is completed, the electronic device applying the present invention continuously detects whether the hardware device having the hardware ID is plugged on the connection unit or not. When it is detected that the hardware device having the hardware ID is not plugged on the connection unit, the processing module executes an operation of turning off the electronic device. When it is detected that the hardware device having the hardware ID is plugged on the connection unit, the processing module maintains the original operating procedure, and does not execute other operations. Therefore, in the system operating method using the hardware lock and the electronic device started by utilizing the hardware lock of the present invention, by continuously detecting whether the hardware device having the hardware ID is plugged or not, when the hardware device having the hardware ID is disconnected, the processing module detects in real time and immediately turns off the electronic device to prevent the data from being stolen. The system operating method using the hardware lock provides a continuous protection until the hardware device is disconnected or the system is turned off, thereby effectively preventing the danger of malicious intrusion or cracking by hackers.

### BRIEF DESCRIPTION OF THE DRAWINGS

The present invention will become more fully understood from the detailed description given herein below for illustration only, and thus are not limitative of the present invention, and wherein:
FIG. 1 is a flow chart of a system operating method using a hardware lock according to a first embodiment of the present invention;
FIG. 2 is a flow chart of a system operating method using a hardware lock according to a second embodiment of the present invention; and
FIG. 3 is a schematic view of an electronic device started by utilizing a hardware lock according to the present invention.

### DETAILED DESCRIPTION OF THE INVENTION

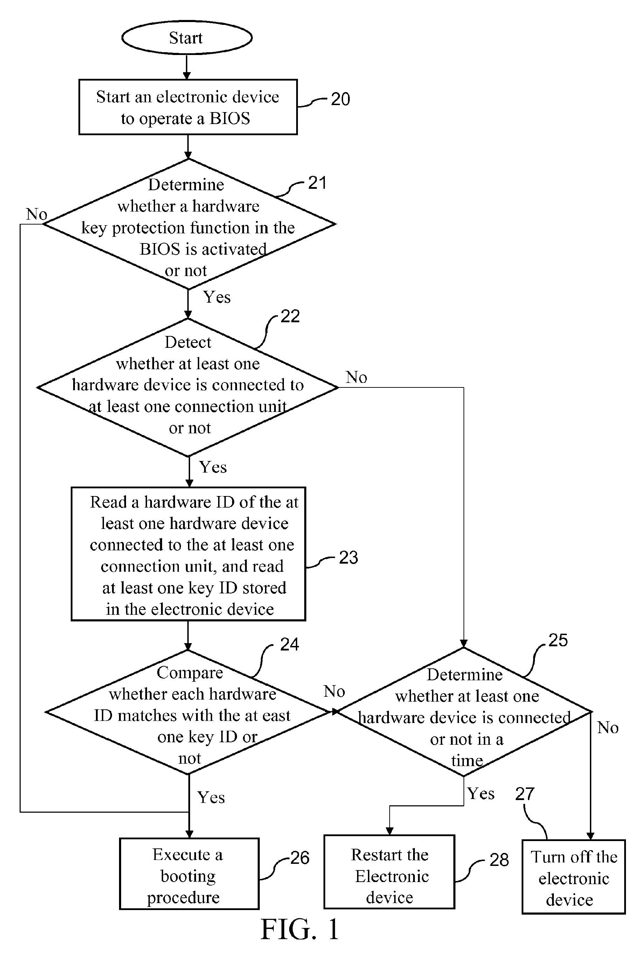

FIG. 1 is a flow chart of a system operating method using a hardware lock according to a first embodiment of the present invention.

Referring to FIG. 1, the system operating method using the hardware lock of this embodiment is applied to an electronic device having at least one connection unit.

In the system operating method using the hardware lock of this embodiment, in a first step (Step 20), the electronic device is started to run a BIOS.

The electronic device may be started by turning on a power actuation element (for example, a power source switch and a booting key, or by plugging a hardware device having a Universal Serial Bus (USB) interface in a corresponding connection port in the electronic device), or the electronic device is started in other modes.

When the electronic device is started by plugging the hardware device having the USB interface in the corresponding connection port in the electronic device, it may be set that when a hardware device is not plugged in the USB connection port of the electronic device, a USB pin of the connection port is in a Low state; when a hardware device is plugged in the USB connection port of the electronic device, the USB pin of the connection port is changed to a High state. Through state changes of the USB pin, the electronic device is started.

The BIOS is used to manage the software of the hardware in the electronic device, so after the electronic device is booted, the BIOS is firstly started, and then the BIOS thoroughly inspects and tests the equipment of the computer. Therefore, in a second step (Step 21), it is determined whether a hardware key protection function in the BIOS is activated or not. Only after the hardware key protection function is activated, and when the electronic device is started, a processing module (comprising a processor, a Southbridge chip, and a Northbridge chip etc.) will detect whether the hardware device is connected to the electronic device or not, and perform the corresponding operations. If the hardware key protection function in the BIOS is not activated, after the electronic device is started, the processing module automatically executes a booting procedure of the electronic device (Step 26) after the BIOS inspects the hardware in the electronic device, and runs an operating system (for example, a Microsoft Windows operating system) stored in a storing unit (for example, a hard disk, a portable disk, and other storage devices) in the electronic device.

When the electronic device is started and it is confirmed that the hardware key protection function in the BIOS is started, in a third step (Step 22), a connection state of each connection unit is detected by a processing module. In this embodiment, the processing module detects the connection state of each connection unit, so as to detect whether at least one hardware device is connected to the connection unit or not. If the processing module detects that no hardware device is connected to the connection unit, and when no hardware device is connected to at least one connection unit, it is determined whether at least one hardware device is connected or not in a time (for example, 5 seconds or 10 seconds) (Step 25), that is, it is determined whether at least one hardware device is connected again after waiting for a time. If no hardware device is connected in the time period, the processing module executes an operation of turning off the electronic device (Step 27). When at least one hardware device is connected in the time period, the processing module executes an operation of restarting the electronic device (Step 28).

The connection unit may be a USB port or a 1394 connection port on the electronic device.

When at least one hardware device is connected to at least one connection unit, a fourth step (Step 23) is performed, that is, the processing module reads a hardware ID of each hardware device connected to the connection unit through the connection unit, and reads at least one key ID stored in the storing unit (for example, a Flash memory) in the electronic device.

After the hardware ID of each hardware device and the key ID stored in the electronic device are read, a fifth step (Step 24) is performed, that is, the processing module compares whether each hardware ID matches with one of the key IDs or not.

When the hardware ID respectively matches with one of the key IDs, the processing module executes the booting procedure of the electronic device (Step 26), that is, the processing module runs the operating system (for example, the Microsoft Windows operating system) stored in the storing unit (for example, the hard disk, the portable disk, and other storage devices) in the electronic device.

It may be set in the BIOS that one of the connection units is used to connect to one hardware device having the hardware ID, and when the hardware ID matches with one of the key IDs, the booting procedure of the electronic device is executed. It may also be set in the BIOS that two of the connection units are used to respectively connect to two hardware devices having the hardware ID, and when the two hardware devices are connected to the connection units and each hardware ID matches with one of the key IDs, the booting procedure of the electronic device is executed. Similarly, when more than three of the connection units are used, a corresponding number of hardware devices having the hardware ID must be connected. The more the connected hardware devices having the hardware ID are, the more effective the function of preventing the data from being stolen will be.

Definitely, it may also be set in the BIOS that the hardware device having the hardware ID is connected to one (or more) specific connection unit. For example, the electronic device has three USB ports (port 1, port2, and port3), and it may be set in the BIOS that port1 is used to connect the hardware device having the hardware ID. When the hardware device having the hardware ID is connected to port2 or port3, the processing module detects that no hardware device having the hardware ID is connected to port1, and directly turns off the electronic device. When the hardware device having the hardware ID is connected to port1, the processing module detects that the hardware device having the hardware ID is connected, and determines whether the hardware ID of the hardware device directly matches with one of the key IDs; if yes, the processing module automatically executes the booting procedure of the electronic device.

When one of the hardware IDs does not match with any key ID, a sixth step (Step 25) is performed, that is, the processing module determines whether at least one hardware device is connected or not in a time (for example, 5 seconds and 10 seconds etc.), that is, the processing module determines whether the hardware device is connected again after waiting for a time. If no hardware device is connected in the time period, the processing module executes the operation of turning off the electronic device (Step 27).

When at least one hardware device is connected in a time, the processing module executes the actuation of restarting the electronic device, so as to detect whether the hardware device connected in the time has the hardware ID matching with one of the key IDs (Step 28).

Here, in the system operating method using the hardware lock, the hardware key protection function in the BIOS is activated before leaving the factory. After the electronic device is started, the processing module detects the connection state of the connection unit on the electronic device, and determines whether the hardware device is plugged, whether the hardware device has the hardware ID, and whether the hardware ID matches with the key ID stored in the storing unit in the electronic device. If yes, the controller executes the booting procedure to run the operating system. If no, the controller executes the operation of turning off the electronic device. The electronic device is started to run the operating system only when the hardware device having the hardware ID is plugged, so as to effectively protect the data in the electronic device. Meanwhile, the system operating method using the hardware lock realizes a protection function at a low cost.

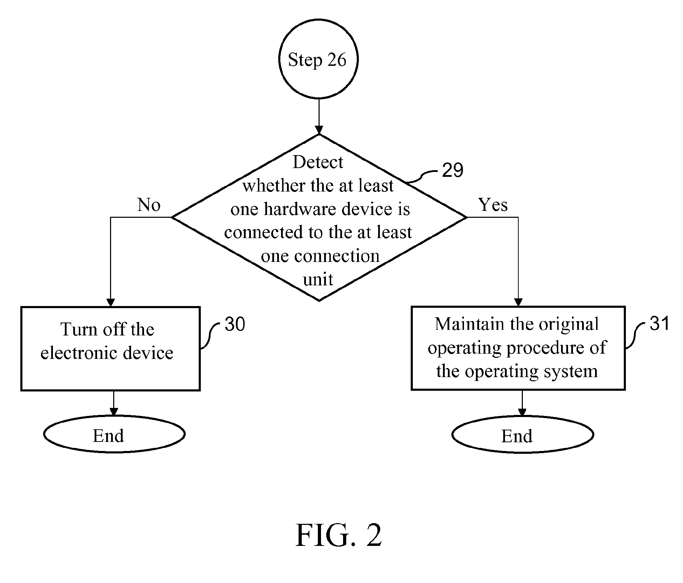

FIG. 2 is a flow chart of the system operating method using the hardware lock according to a second embodiment of the present invention.

Referring to FIG. 2 and the above embodiment, the system operating method using the hardware lock of this embodiment further comprises the following steps. After the booting procedure is completed, the connection state of the at least one connection unit is continuously detected (Step 29). When no hardware device is connected to the at least one connection unit, the electronic device is turned off (Step 30). When any hardware device is connected to the at least one connection unit, the operating procedure of the original operating system is maintained (Step 31).

After the booting procedure is completed, that is, after the operating system runs, the processing module detects the connection state of the at least one connection unit in real time or at a fixed interval (for example, every second, every 5 seconds, or every minute) (Step 30). If the processing module detects that no hardware device is connected to the at least one connection unit, the processing module directly turns off the electronic device (Step 30). If the processing module detects that the at least one hardware device is connected to the at least one connection unit, the processing module maintains the operating procedure of the original operating system, and does not execute other operations (Step 31).

Here, in the system operating method using the hardware lock, the hardware key protection function in the BIOS is activated before leaving the factory. After the electronic device is started, the processing module detects the connection state of the connection unit on the electronic device, determines whether the hardware device is plugged, whether the hardware device has the hardware ID, and whether the hardware ID matches with the key ID stored in the storing unit in the electronic device. If yes, the controller executes the booting procedure to operate the operating system. If no, the controller executes the operation of turning off the electronic device. In the system operating method using the hardware lock of this embodiment, after the booting procedure is completed, it is continuously detected whether the hardware device having the hardware ID matching with one of the key IDs is continuously plugged on the connection unit or not. When it is detected that the hardware device having the hardware ID matching with one of the key IDs is not plugged on the connection unit, the processing module executes the operation of turning off the electronic device. When it is detected that the hardware device having the hardware ID matching with one of the key IDs is plugged on the connection unit, the processing module maintains the operating procedure of the original operating system, and does not execute other operations. By continuously detecting whether the hardware device having the hardware ID matching with one of the key IDs is plugged or not, when the user moves away from the electronic device and disconnects the hardware device having the hardware ID, the processing module detects in real time and immediately turns off the electronic device to prevent the data from being stolen. The system operating method using the hardware lock provides the continuous protection until the hardware device is disconnected or the system is turned off, thereby effectively preventing the danger of malicious intrusion or cracking by hackers.

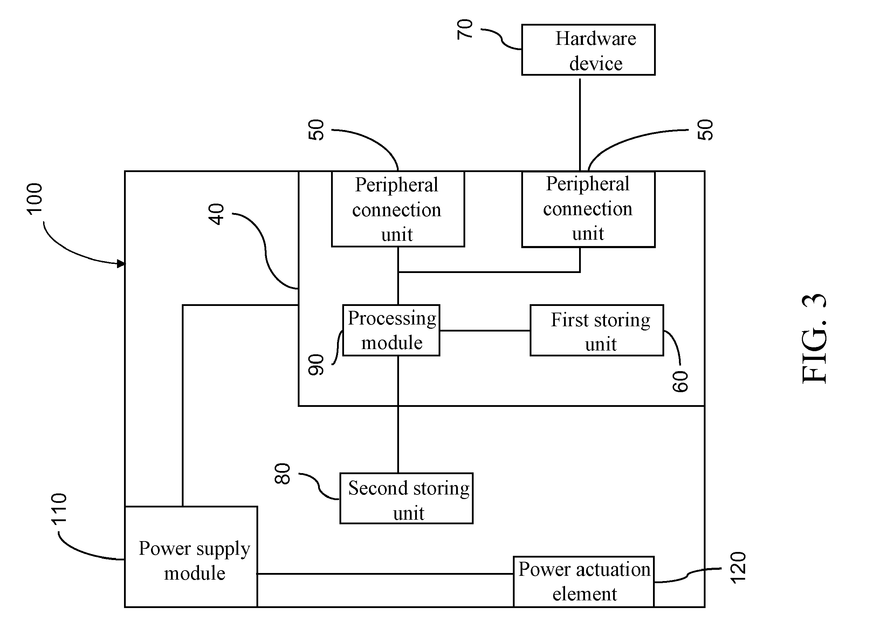

FIG. 3 is a schematic view of an electronic device started by utilizing the hardware lock according to the present invention.

Referring to FIG. 3 and the above embodiments, the electronic device started by utilizing the hardware lock of the present invention comprises a case 100, a main board 40, peripheral connection units 50, a first storing unit 60, a hardware device 70, a second storing unit 80, and a processing module 90.

The processing module 90 comprises a processor, a Southbridge chip, and a Northbridge chip.

For the convenience of illustration, in this embodiment, the number of the hardware device 70 is one, and the number of the peripheral connection units 50 is two. However, the numbers are not limited in the present invention; definitely, the number of the hardware devices 70 may be two or more than three, and the number of the peripheral connection units 50 may be one or more than three.

The main board 40 is disposed in the case 100, and the two peripheral connection units 50 are respectively electrically connected to the main board 40. Therefore, the two peripheral connection units 50 may be connection ports on the main board 40; definitely, the two peripheral connection units 50 may also be the connection ports on the case 100 and electrically connected to the main board 40.

Each hardware device 70 respectively records one hardware ID, and each hardware ID is corresponding to one of the at least one key ID. The at least one key ID is pre-stored in the first storing unit 60 before leaving the factory.

The second storing unit 80 and the processing module 90 are respectively electrically connected to the main board 40.

The hardware device 70 is used to connect any one of the two peripheral connection units 50. Definitely, it may also be limited that the hardware device 70 can be plugged in only a specific one of the two peripheral connection units 50.

The second storing unit 80 is used to store an operating system.

The processing module 90 is used to detect the connection state of the at least one peripheral connection unit 50, compare each hardware ID with the at least one key ID, and execute relevant operations.

After the electronic device is started, the processing module 90 detects the connection state of the at least one peripheral connection unit 50, and compares each hardware ID with the at least one key ID. When the hardware device 70 is not connected to the at least one peripheral connection unit 50, the electronic device is turned off. When the hardware ID respectively matches with one of the at least one key ID, a booting procedure of the electronic device is executed. When the at least one hardware ID does not match with the at least one key ID, the electronic device is turned off.

After the booting procedure is completed, the processing module 90 detects the connection state of the at least one peripheral connection unit 50, and compares each hardware ID with the at least one key ID. When it is confirmed that each hardware device 70 is not connected to each peripheral connection unit 50, the electronic device is turned off.

The electronic device started by utilizing the hardware lock of this embodiment further comprises a power supply module 110 and a power actuation element 120. The power supply module is electrically connected to the electronic device, and is used to supply an electric energy to the electronic device. The power actuation element 120 is electrically connected to the electronic device, and is used to start the electronic device after being triggered.

The peripheral connection units 50 may be USB ports or 1394 connection ports.

The first storing unit 60 may be a Flash memory or other storage devices.

The hardware device 70 has connection interfaces corresponding to the connection ports of the peripheral connection units 50.

The second storing unit 80 may be a hard disk or a portable disk.

The power actuation element 120 may be at least one of a power source switch or a USB.

Here, in the electronic device started by utilizing the hardware lock, the key ID is pre-stored in the first storing unit 60, and the hardware ID is recorded in the hardware device 70 before leaving the factory. The electronic device is started by plugging the hardware device 70 on the peripheral connection units 50. After the electronic device is started, the processing module 90 detects the connection state of the peripheral connection units 50 on the electronic device, determines whether the hardware device 70 is plugged, whether the hardware device 70 has the hardware ID, and whether the hardware ID matches with the key ID stored in the first storing unit 60 in the electronic device. If yes, the processing module 90 executes the booting procedure to run the operating system stored in the second storing unit 80. If no, the processing module 90 executes the operation of turning off the electronic device. In the electronic device started by utilizing the hardware lock of this embodiment, after the booting procedure is completed, the processing module 90 continuously detects whether the hardware device 70 having the correct hardware ID is continuously plugged on the peripheral connection units 50. When it is detected that the hardware device 70 having the correct hardware ID is not plugged on the peripheral connection units 50, the processing module 90 executes the operation of turning off the electronic device. When it is detected that the hardware device 70 having the correct hardware ID is plugged on the peripheral connection units 50, the processing module 90 maintains the original operating procedure, and does not execute other operations. By continuously detecting whether the hardware device 70 having the correct hardware ID is plugged or not, when the user moves away from the electronic device and disconnects the hardware device 70 having the correct hardware ID, the processing module 90 detects in real time and immediately turns off the electronic device to prevent the data from being stolen. The electronic device started by utilizing the hardware lock provides the continuous protection until the hardware device is disconnected or the system is turned off, thereby effectively preventing the danger of malicious intrusion or cracking by hackers.

To sum up, the system operating method using the hardware lock and the electronic device started by utilizing the hardware lock of the present invention are applied to the electronic device. The electronic device is started to run the operating system by plugging the hardware lock (that is, the hardware device having the hardware ID matching with the key ID). When the electronic device is started and the operating system runs, it is continuously detected whether the hardware lock is plugged or not to determine whether to turn off the electronic device or not, thereby protecting the data.

## Claims

1. A system operating method using a hardware lock, applied to an electronic device having at least one connection unit, comprising:
detecting a connection state of the connection unit;
reading a hardware identification (ID) of at least one hardware device connected to the at least one connection unit and reading at least one key ID stored in the electronic device when the at least one hardware device is connected to the at least one connection unit;
comparing each of the hardware ID with the at least one key ID;
executing a booting procedure of the electronic device when the hardware ID respectively matches with one of the at least one key ID;
turning off the electronic device when the hardware device is not connected to the at least one connection unit; and
turning off the electronic device when the at least one hardware ID does not match with the at least one key ID.

2. The system operating method using a hardware lock according to claim 1, further comprising:
starting the electronic device to run a basic I/O system (BIOS) before the step of detecting the connection state of the connection unit.

3. The system operating method using a hardware lock according to claim 1, wherein after the booting procedure is completed, the method further comprises:
detecting the connection state of the connection unit; and
turning off the electronic device when one of the at least one hardware device is not connected to the at least one connection unit.

4. The system operating method using a hardware lock according to claim 1, wherein the step of executing the booting procedure of the electronic device comprises executing an operating system stored in the electronic device.

5. The system operating method using a hardware lock according to claim 2, further comprising:
confirming that a hardware key protection function in the BIOS is activated; and
executing the booting procedure when the hardware key protection function is not activated.

6. The system operating method using a hardware lock according to claim 1, wherein the step of turning off the electronic device when the at least one hardware ID does not match with the at least one key ID comprises:
turning off the electronic device when the at least one hardware ID does not match with the at least one key ID and the at least one hardware device is not connected in a time.

7. The system operating method using a hardware lock according to claim 6, wherein when the at least one hardware device is connected in the time, the electronic device is restarted.

8. The system operating method using a hardware lock according to claim 1, wherein the step of turning off the electronic device when the hardware device is not connected to the at least one connection unit comprises:
turning off the electronic device when the hardware device is not connected to the at least one connection unit and the at least one hardware device is not connected in a time.

9. The system operating method using a hardware lock according to claim 8, wherein when the at least one hardware device is connected in the time, the electronic device is restarted.

10. An electronic device started by utilizing a hardware lock, comprising:
a case;
a main board, disposed in the case;
at least one peripheral connection unit, electrically connected to the main board;
a first storing unit, disposed on the main board, for storing at least one key identification (ID);
at least one hardware device, respectively recording a hardware ID, wherein each of the hardware ID is corresponding to one of the at least one key ID, and the hardware device is used to plug in one of the at least one peripheral connection unit;
a second storing unit, electrically connected to the main board, for storing an operating system; and
a processing module, for detecting a connection state of the at least one peripheral connection unit, comparing each of the hardware ID with the at least one key ID, and executing relevant operations.

11. The electronic device started by utilizing a hardware lock according to claim 10, wherein after the electronic device is started, the processing module detects the connection state of the at least one peripheral connection unit, and compares each of the hardware ID with the at least one key ID, when the hardware device is not connected to the at least one peripheral connection unit, the electronic device is turned off, when the hardware ID respectively matches with one of the at least one key ID, a booting procedure of the electronic device is executed, when the at least one hardware ID does not match with the at least one key ID, the electronic device is turned off; after the booting procedure is completed, the processing module detects the connection state of the at least one peripheral connection unit, and compares each of the hardware ID with the at least one key ID, when it is confirmed that each of the hardware device is not connected to each of the peripheral connection unit, the electronic device is turned off.

12. The electronic device started by utilizing a hardware lock according to claim 10, further comprising:
a power supply module, electrically connected to the electronic device, for supplying an electric energy to the electronic device; and
a power actuation element, electrically connected to the electronic device, for starting the electronic device after being triggered.

13. The electronic device started by utilizing a hardware lock according to claim 12, wherein the power actuation element is at least one of a power source switch and a universal serial bus (USB).
